(19) Europäisches Patentamt
European Patent Office
Office européen des brevets

(11) **EP 2 346 131 A2**

(12) **EUROPÄISCHE PATENTANMELDUNG**

(43) Veröffentlichungstag:
**20.07.2011 Patentblatt 2011/29**

(51) Int Cl.:
*H02G 5/06* (2006.01)    *H02G 5/10* (2006.01)

(21) Anmeldenummer: **10194900.6**

(22) Anmeldetag: **14.12.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **18.01.2010 EP 10150959**

(71) Anmelder: **ABB Technology AG**
**8050 Zürich (CH)**

(72) Erfinder: **Saxl, David**
**CH-8046 Zürich (CH)**

(74) Vertreter: **ABB Patent Attorneys**
**C/o ABB Schweiz AG**
**Intellectual Property (CH-LC/IP)**
**Brown Boveri Strasse 6**
**CH-5400 Baden (CH)**

(54) **Anordnung von Stromleitern in einer gasisolierten Anlage zur verbesserten Kühlung**

(57) Hoch- oder Mittelspannungs-Schaltanlagensegment (1) mit mindestens einem Stromleiter (10), welcher mittels eines Isoliergases in einem metallgekapselten Gehäuse des Schaltanlageabschnitts elektrisch isoliert angeordnet ist. Der Stromleiter (10) umfasst mindestens einen Leiterabschnitt, welcher sich in einer Längsrichtung (Y) erstreckt und ist aus mindestens einem Profil konstanten Querschnitts hergestellt. Der Profilquerschnitt des Stromleiters (10) weist eine Höhe (16) auf, welche mindestens doppelt so gross wie eine Breite (18) des Profilquerschnitts ist. Eine Mantelfläche des mindestens einen Leiterabschnitts ist von ihrer Grösse und Ausrichtung relativ zur Wirkrichtung der Erdanziehungskraft so bemessen und im Gehäuse ausgerichtet ist, dass sich im Nominalbetrieb des Stromleiters (10) an der Mantelfläche selbsttätig eine freie Konvektionsströmung des Isoliergases mit einer bezüglich der Wirkrichtung der Erdanziehungskraft entgegengesetzten Richtungskomponente einstellt.

Fig. 1

**Beschreibung**

**TECHNISCHES GEBIET**

Die vorliegende Erfindung betrifft einen Stromleiter einer gasisolierten Schaltanlage, insbesondere einen Stromleiter einer gasisolierten Hoch- oder Mittelspannungsschaltanlage. Solche Stromleiter dienen zur Übertragung von Nennleistungen innerhalb einer Schaltanlage, sie werden deshalb auch Nominalleiter, Primärphasenleiter oder Primärleiter genannt.

**TECHNOLOGISCHER HINTERGRUND UND STAND DER TECHNIK**

Typischerweise werden Stromleiter zur Übertragung von Nennströmen in einer gasisolierten Schaltung, nachfolgend vereinfachend GIS genannt, innerhalb eines röhrenartigen Gehäuses geführt.

Aufgrund der zunehmenden Nachfrage nach kleineren, aber dennoch leistungsfähigen GIS für Mittel- und Hochspannungsanlagen, kommt der Kompaktheit einer GIS eine entscheidende Bedeutung zu. Diese Kompaktheit wird erreicht, indem der Stromleiter bezüglich des oft auf Erdpotential liegenden Gehäuses mit einem geeigneten Isoliergas, meistens Schwefelhexafluorid (SF6), elektrisch isoliert ist.

Da das Gehäuse mit einem unter Druck von mehreren Bar stehenden Isoliergas beziehungsweise Isoliergas steht, werden insbesondere bei Hochspannungsschaltanlagen aus drucktechnischen Gründen oft Gehäuse mit einem kreisringförmigen Querschnitt eingesetzt. Dazu wird pro elektrische Phase meistens ein zylindrischer Stromleiter mit einem ebenfalls kreis- oder kreisringförmigen Leiterquerschnitt eingesetzt.

Ist lediglich ein Stromleiter in einem Gehäuse angeordnet spricht man von einem einphasig gekapselten System, während man bei drei Stromleitern, welche unterschiedliche elektrische Potentiale aufweisen und dennoch in einem gemeinsamen Gehäuse angeordnet sind, von einem dreiphasig gekapselten System spricht.

Werden von einer GIS nun höhere elektrische Leistungen bei gleichbleibendem Isoliergas und gleichbleibendem Aufbau und gleichbleibenden Materialien gefordert, wirkt sich dies in der Regel negativ auf die Abmessungen der GIS aus, da die GIS aufgrund vergrösserter Gehäusedurchmesser weniger Kompakt realisiert werden kann.

**ZUSAMMENFASSUNG DER ERFINDUNG**

Es ist daher eine Aufgabe der vorliegenden Erfindung, eine gasisoliertes Hochspannungs-Schaltanlagensegment mit mindestens einem Stromleiter vorzulegen, welches eine gewisse Leistungssteigerung der Nenn- oder Nominalleistung in den Primärleitern ermöglichen, ohne dass eine Vergrösserung der Gehäuseabmessungen zwingend erforderlich ist. Es ist eine weitere Aufgabe, eine für einen Einbau in einer bestehenden gasisolierten Schaltanlage vorgesehenen Stromleiter vorzulegen, welcher bei gleichbleibendem Gehäuse eine gewisse Leistungssteigerung der Nennleistung der GIS ermöglicht. Eine weitere Aufgabe besteht darin, ein Verfahren zur Kühlung mindestens eines Stromleiters einer gasisolierten Schaltanlage vorzulegen, welches es erlaubt, eine Leistungssteigerung der Nennleistung der GIS vorzunehmen, ohne dass eine Vergrösserung der Gehäuseabmessungen aufgrund der Leistungssteigerung unumgänglich ist.

Hinsichtlich des Hochspannungs-Schaltanlagensegments beziehungsweise für eine gasisolierte Schaltanlage Hochspannungs-Schaltanlagensegment mit einem solchen Hochspannungs-Schaltanlagensegment wird dieses Ziel durch einen Stromleiter gemäss Anspruch 1 oder 15 gelöst.

Eine Leistungserhöhung führt aufgrund des Ohm'schen Gesetzes bei gleicher Stromleiterqualität, d.h. bei gleichem Leitermaterial, zu mehr Verlusten. Diese Verluste fallen als Wärme an, welche in der Regel über Wärmestrahlung und Wärmekonvektion vom Stromleiter über das Gehäuse and die Gehäuseumgebung abgegeben wird. Beträgt der Absolutdruck des Isolationsgases SF6 in einer beispielhaften GIS-Anwendung im Allgemeinen gleich oder mehr als etwa 200000 Pascal (ca. 2 bar), so ist der Konvektionsanteil der Stromleiterkühlung anteilmässig wesentlicher grösser als der Anteil der Wärmestrahlung.

Die vorliegende Erfindung zielt darauf ab, die grössere Verlustenergie des mindestens einen Stromleiters so weit wie möglich mit dem vorhandenen Isolationsgas auf das Gehäuse zu übertragen, selbst wenn im Schaltanlagenabschnitt nur wenig Leiterbauraum zur Anordnung und Ausgestaltung eines Stromleiters zur Verfügung steht. Die vorliegende Erfindung nutzt dabei zwei physikalische Effekte. Der erste Effekt besteht darin, dass das Isoliergas bei einem etwa horizontal zur Erdoberfläche verlaufend angeordneten Gehäuseabschnitt einer GIS im Betriebsfall, d.h. im Fall der Nominalbelastung (Dauerbelastung) einen Temperaturgradienten aufweist. Dabei weist das Isoliergas im mindestens einen Längsabschnitt der gasisolierten Schaltanlage im Querschnitt gesehen einen in Richtung der Erdanziehungskraft entgegen gesetzt verlaufenden Temperaturgradienten. Dabei ist die Temperatur in der im Querschnitt durch das Gehäuse gesehen, oberen Gehäusehälfte höher als in der unteren Gehäusehälfte. Den zweiten Effekt bildet der Skineffekt, bei welchem die Stromeindringtiefe bei einem höherfrequenten Wechselstrom von etwa 50 bis 60Hz in den Stromleiter verhältnismässig gering ist.

In einer Basisausführung weist die erfindungsgemässe Hochspannungs-Schaltanlagensegment mindestens einen Stromleiter auf, welcher mittels einem Isoliergas in einem metallgekapselten Gehäuse des Schaltanlagenabschnitts elektrisch isoliert angeordnet ist. Das Isoliergas ist beispielsweise Luft, $O_2$, Ar, CO, $CO_2$, He, $N_2$, $SeF_6$, $NH_3$, $C_2F_6$, $C_3F_8$, $CF_3I$, $CF_4$ oder einem Gasgemischen aus mindestens zwei dieser Gase.

Unter Hochspannungs-Schaltanlagensegment wird ein sich in Richtung eines Nominalleiters erstreckender Abschnitt einer gasisolierten Schaltanlage, kurz GIS, verstanden. Als Beispiel eines solchen Hochspannungs-Schaltanlagensegments seinen hier stellvertretend ein Schaltfeld oder eine Sammelschiene einer Unterstation genannt.

Unter Hochspannung versteht man in dieser Beschreibung eine Betriebs- bzw. Nominalspannung nach DIN VDE von mindestens 1000 Volt (1 kV).

Dabei weist der Stromleiter mindestens einen Leiterabschnitt auf, welcher sich in einer Längsrichtung (Z) erstreckt. Der Stromleiter ist aus einem Profil, je nach Ausführungsform aus einem Halbzeugprofil, konstanten Querschnitts hergestellt. Dabei weist der Profilquerschnitt des Stromleiters eine Höhe auf, welche mindestens doppelt so gross wie eine Breite des Profilquerschnitts ist. In einer Basisausführung des Stromleiters ist dieser ein Flachleiter, welcher einen rechteckartigen beziehungsweise rechteckförmigen Profilquerschnitt aufweist, wobei dessen sich in Längsrichtung erstreckende Kanten/Ecken aus dielektrischen Gründen verrundet sind.

Je nach Ausführungsform kann das Profil beziehungsweise das Halbzeug sogar ein Standardprofil sein, etwa ein stranggezogenes Aluminium- oder Kupferprofil. Eine Mantelfläche des mindestens einen Leiterabschnitts ist von ihrer Grösse (und Ausrichtung relativ zur Erdanziehungskraft) so bemessen und im Gehäuse ausgerichtet, dass sich im Nominalbetrieb des Stromleiters an der Mantelfläche selbsttätig eine freie Konvektionsströmung des Isoliergases mit einer bezüglich der Wirkrichtung der Erdanziehungskraft entgegengesetzten Richtungskomponente einstellt. Die Mantelfläche erstreckt sich in Umfangsrichtung des Stromleiters. Dies ermöglicht beispielsweise bei Hochspannungs-GIS-Anwendungen, welche mit SF6 isoliert sind, über die freie Konvektionsströmung mindestens 60% der durch elektrische Verluste entstehenden Wärmemenge des mindestens einen Stromleiters mittels Wärmekonvektion von der Mantelfläche des mindestens einen Leiterabschnitts an das Isoliergas und vom Isoliergas an das Gehäuse abzuführen. Unter elektrischen Verlusten werden dabei die Leiterverluste und allfällig vorhandene Kontaktverluste verstanden.

Anders ausgedrückt förderte die durch die Konvektionsströmung entstehende Gasbewegung im Betrieb der Schaltanlage einerseits etwas kühleres Isoliergas aus einem dem Erdmittelpunkt näherliegenden Ort innerhalb des vom Gehäuse umschlossenen Gasraums in Richtung eines dem Erdmittelpunkt ferner liegenden Ort innerhalb des vom Gehäuse, wo eine etwas höhere Temperatur herrscht. Bildlich gesprochen, fördert die Konvektionsströmung mindestens im Nominalbetrieb der gasisolierten Schaltanlage verhältnismässig kühles Isoliergas aus einem Kaltgas-See pumpenlos und selbsttätig in wärmere Zonen des Hochspannungs-Schaltanlagensegments.

Der Leiterquerschnitt ist je nach Bedarf auswählbar und kann verschiedenste Querschnittsformen aufweisen. Je nach Ausführungsform und Anforderungen kann der Leiterquerschnitt auch aus verschiedenen Profilen beziehungsweise zusammengesetzten Profilabschnitten gebildet sein. Zudem kann sich der Stromleiter auch in mehr als einer einzige Richtung erstrecken, etwa bei Verzweigungen, Abstützungen, Durchführungen und dergleichen. Falls erforderlich, kann der Stromleiter auch durch Verdrehen um seine Längsachse hergestellt sein (twisted). Eine solche verdrehte Ausführungsform des Stromleiters ist insbesondere bei einer vertikalen Ausrichtung der Stromleiter thermisch interessant. Das heisst also dann, wenn ihre Längsachse in etwa in der Wirkrichtung der Erdanziehungskraft angeordnet ist.

Entscheidend ist lediglich, dass der mindestens eine Abschnitt des Stromleiters die Bedingungen hinsichtlich der Erzeugung/Begünstigung der Bildung einer freien Gaskonvektionsströmung erfüllt.

Ferner gilt es zu beachten, dass das erfindungsgemässe Hochspannungs-Schaltanlagensegment nicht nur auf Anwendungen beschränkt ist, deren Strompfad der Leiter sich horizontal erstreckt, also in Richtung der Erdoberfläche, sondern auch in vertikaler Richtung oder einer in einem Winkel zur Wirkrichtung der Erdanziehungskraft verlaufenden Richtung. Bei einer Ausrichtung des Stromleiters mit einer zunehmenden vertikalen Komponente, das heisst unter einem Winkel zur Richtung der Erdanziehungskraft, erhöht sich ein Freiheitsgrad der möglichen Querschnittsform des Profilquerschnitt, da die freie Konvektionsströmung zumindest teilweise in Richtung der Profillaufrichtung verläuft und somit eine Umströmung und somit die Kühlwirkung im Abschnitt der Mantelfläche nicht oder zumindest nur geringfügig beeinträchtigt.

Das erfindungsgemässe Hochspannungs-Schaltanlagensegment mit aus Halbzeugen, insbesondere Profilen, hergestellten Stromleitern führt zu folgenden Vorteilen:

Erstens sind aus Halbzeugen hergestellte Stromleiter typischerweise form- und masshaltiger als Spezialprofile oder formgegossene Profile. Dies erlaubt eine bessere Ausnutzung des oft limitierten Bauraumes für die Anordnung von Phasenverschienungen in einem Hochspannungs-Schaltanlagensegment.

Zweitens eignen sich aus Halbzeugen hergestellte Stromleiter typischerweise hervorragend zum Biegen, beispielsweise um einen Anschlussschenkel rechtwinklig vom restlichen Leiterkörper herzustellen. Dies gilt besonders bei einer Ausführungsform des Stromleiters als Flachprofil.

Drittens ermöglicht eine Ausführungsform des Stromleiters als Flachprofil eine sehr einfache und in der Folge kostengünstige Bearbeitung, etwa in Form von Bohrungen oder Fräsungen, oder dergleichen.

Viertens erleichtert eine Ausführungsform des Stromleiters als Flachprofil erleichtert die Lagerhaltung und die Montage.

Fünftens ist eine gesteigerte beziehungsweise höhere Durchführung der Nominalleistung im Rahmen eines Retro-Fitting Prozesses durch ein Auswechseln der/des alten Stromleiters gegen einen/mehrere Stromleiter gemäss der vorliegenden Erfindung unter Beibehaltung des alten Gehäuses realisierbar.

Bei der Verwendung von Stromleitern in Form von Standardprofilen ergeben sich noch zusätzliche Vorteile, wie beispielsweise:

a) Standardprofile sind selbst bei kleinen Serien, d.h. wenigen benötigten Laufmetern, deutlich kostengünstiger als Spezialprofile oder formgegossene Profile

b) Standardprofile der Elektroindustrie sind typischerweise in verschiedensten Qualitäten mit verschiedensten Leitwerten erhältlich. Im Gegensatz dazu lassen sich nicht alle Leiterlegierungen gleich wirtschaftlich giessen. In der Folge resultiert die Wahl von Standardprofilen für den/die Stromleiter in einer grösseren Designfreiheit, welche Optimierungen zulässt, die bei gegossenen Leiterteilen nicht möglich sind.

c) Standardprofile haben typischerweise höhere Leitwerte als formgegossene Profile

Weitere Vorteile ergeben sich bei einer Aufteilung des mindestens einen Stromleiters für den Fall, wo höhere Nominalleistungen durch den Stromleiter hindurchgeführt werden. Da der Strom aufgrund des Skineffektes bei höheren Frequenzen hauptsächlich in den Randbereichen des Stromleiters fliesst und kaum/nicht im Profilzentrum kann es unter Umständen von Vorteil sein, den Stromleiter in mehrere Einzelprofile zu unterteilen und als Leiterpackung auszuführen. Die dadurch vergrösserte Mantelfläche des Stromleiters begünstigt die Wärmeübertragung vom Stromleiter auf das Isoliergas zusätzlich. Falls zwei benachbarte Einzelprofile eines einzigen Stromleiters in einem festgelegten Abstand voneinander entfernt angeordnet sind, ist der dadurch entstehende Kamineffekt zusätzlich für die Unterstützung der Kühlwirkung des Stromleiters nutzbar. Zudem ist die Kühlwirkung aufgrund vergrösserter, wirksamer Kühlfläche (Mantelfläche) weiter verbesserbar beziehungsweise gezielt zur Wärmeübertragung nutzbar.

Je nach Bedarf und jeweiligen Anforderungen sind die Merkmale alternativ oder kumulativ miteinander kombinierbar.

Das erfindungsgemässe Schaltanlagensegment hat sich besonders bei Hochspannungsanwendungen als besonders effektiv erwiesen. Dabei stand das Isoliergas (SF6) im Betrieb des Schaltanlagensegments bei mehr als 50kV unter einem Absolutdruck von mindestens 200000 Pascal.

Insbesondere bei Hochspannungsanwendungen hat sich gezeigt, dass sich im Nominalbetrieb des mindestens einen Stromleiters ein Kühleffekt des mindestens einen Stromleiters (10) einstellt, dessen mittels Wärmekonvektion ans Isoliergas und vom Isoliergas auf das Gehäuse übertragbarer erster Wärmeanteil grösser als ein mittels Wärmestrahlung auf das Gehäuse übertragbarer zweiter Wärmeanteil ist.

Eine Basisausführung mit einem einzigen Stromleiter mit einem Rechteckquerschnitt weist eine Mantelfläche einen ersten Mantelflächenabschnitt und einen dem ersten Mantelflächenabschnitt gegenüberliegend angeordneten zweiten Mantelflächenabschnitt auf, wobei der erste und der zweite Mantelflächenabschnitt vorzugsweise von den dimensionsmässig grösseren Profilflanken gebildet ist. Anders ausgedrückt bilden der erste Mantelflächenabschnitt und der zweite Mantelflächenabschnitt beim rechteckförmigen Profilquerschnitt die grösseren Seiten des rechteckartigen Profilquerschnitts. Die Mantelflächenabschnitte sind Teilmantelflächen der sich in Umfangsrichtung des Stromleiters erstreckenden Mantelfläche. In Richtung des Stromleiters befinden sich die Mantelflächenabschnitte/ Teilmantelflächen entsprechend im mindestens einen Leiterabschnitt.

Um eine thermisch eine wesentliche Kühlwirkung des mindestens einen Stromleiters zu erzielen, ist der erste und/oder der zweite Mantelflächenabschnitt relativ zur Wirkrichtung der Erdanziehungskraft derart ausgerichtet, dass das Isoliergas im Nominalbetrieb des Stromleiters entlang dem ersten und/oder zweiten Mantelflächenabschnitt eine resultierende Fliessgeschwindigkeit von mindestens 0.01m/s aufweist. Dabei weist ein Kühlstrom eine entgegen der Wirkrichtung der Erdanziehungskraft wirkende Fliessrichtungskomponente auf, welche mindestens 50% der resultierenden Fliessgeschwindigkeit des Kühlstroms beisteuert.

Der Wärmeübergang vom mindestens einen Stromleiter ins Isoliergas ist weiter verbesserbar, wenn der mindestens eine Stromleiter zumindest partiell eine derart beschaffene Oberfläche aufweist, dass im Nominalbetrieb des Stromleiters die Konvektionsströmung beim ersten und/oder zweiten Mantelflächenabschnitt überwiegend turbulent ist. Dadurch sind vorteilhafte Kühlwerte des mindestens einen Stromleiters erreichbar. Eine turbulente Gasströmung hat im Gegensatz zu einer laminaren Gasströmung den Vorteil, dass das Isoliergas bei Ersterer mehr Wärme aufnehmen kann, da mehr Gasvolumen in den direkten Kontakt mit der ersten und/oder zweiten Mantelflächenabschnitt gelangen können, als bei Letzterer. Als Beispiel für geeignete Oberflächenbeschaffenheiten seien hier stellvertretend eine Beschichtung des Stromleiters mit einer gewissen Oberflächenstruktur oder eine gewisse Rauheit des Stromleiters genannt. Wichtig ist hierbei, dass Vorsprünge der Oberflächenstruktur dielektrisch möglich optimiert sind. Ergänzend und/oder alternativ dazu sind auch Ausführungsformen mit Verwirbelungselementen, beispielsweise mit auf dem Stromleiter angebrachten (oder gar integrierten) nockenförmigen Punkten, Prismen oder Leisten realisierbar.

Generell gilt für die abgegebene Wärmeenergie Q folgende allgemein bekannte Gesetzmässigkeit

$$Q_{ab} = \alpha \cdot A \cdot \Delta T$$

wobei $\alpha$ der Wärmeübergangskoeffizient, A die Oberfläche und $\Delta T$ die Temperaturveränderung darstellt. Unter dem Begriff abgegebene Wärmeenergie wird dabei die per Wärmeübertragung von der Stromleiteroberfläche in das Isoliergas abgegebene Energiemenge verstanden. Der Wärmeübergangskoeffizient beinhaltet Effekte der Strahlung wie auch der Konvektion. Eine theoretische Messgrösse bestehend aus geometrischen Werten zeigt eine vorteilhafte Leitergestaltung, welche das Materialkosten/Bauraumverhältnis optimal definiert.

Wenn die Oberfläche eines Stromleiterprofils eine möglichst grosse Oberfläche haben soll, so kann der Leiterquerschnitt nicht kreisrund bleiben, sondern er wird einen länglichen Querschnitt haben. Ausgehend von einem quadratischen Querschnitt ist die Oberfläche (Mantelfläche) des Stromleiters weiter vergrösserbar, wenn die Höhe des Profils grösser als die Breite des Profilquerschnitts ist. Das Optimum wäre eine maximale Höhe und eine minimalste Breite des Stromleiters, so dass Letzterer fast nur folienartig wäre. Da ein folienartiger flacher Stromleiter besonders bei beengten Platzverhältnissen für einen Leiterbauraum ungeeignet sind, gibt es ein erstes Optimum zwischen Breite zu Höhe.

Des Weiteren treten im Betrieb bei Wechselstrom-Stromleitern Skineffekte auf, welche mit zunehmender Stromfrequenz stets ausgeprägter werden und deshalb insbesondere bei höherfrequenten Anlagen und Anlagenteilen bei der Dimensionierung von Stromleitern beachtet werden müssen. Auf der einen Seite liegt die klassische Lösung einer Skineffekt-optimierten Querschnittsform typischerweise in Stromleitern, welche einen kreisringförmigen Leiterquerschnitt aufweisen. Aufgrund der Tatsache, dass sich der Strom insbesondere bei höherfrequenter Belastung fast ausschliesslich nur noch auf den Mantelflächenbereich konzentriert, weisen kreisringförmige Leiterquerschnitte in der Regel vergleichsweise grosse Aussendurchmesser auf. Leider sind aber bei knapp bemessenen Leiterbauraumverhältnissen Stromleiter mit grossen Aussendurchmessern ungeeignet. Auf der anderen Seite ist ein folienartiger flacher Stromleiter mit einer sehr grossen Höhe und gleichzeitig minimalster Breite jedoch hinsichtlich einer Skineffekt-optimierten Querschnittsform ebenfalls völlig ungeeignet.

Es gilt daher eine möglichst ideale Balance der thermisch wirksamen Oberfläche des Stromleiters und des Skineffektes zu schaffen, wenn der Leiterbauraum optimal ausgenutzt werden soll. Diese Balance ist mit bekannten Hohlleitern nicht erreichbar.

Dagegen ist bei Stromleitern aus in Form von Vollprofilleitern oder Hohlleitern mit elektrisch vernachlässigbaren Hohlräumen im Inneren, welche typischerweise nicht im Kontakt mit dem Isoliergas stehen, eine gute Balance erreichbar, wenn das Verhältnis von deren Höhe zu deren Breite und in der Folge von deren Oberfläche im Verhältnis zu deren Leiterquerschnitt pro Abschnitt des Stromleiters in Längsrichtung des Stromleiters innerhalb gewisser Grenzen bleibt. Diese Grenzen sind Grenzwerte eines Quotienten Z, resultierend aus Umfang des Profilquerschnitts im Leiterabschnitt pro Fläche des Profilquerschnitts (Profilquerschnittfläche).

Anhand eines Beispiels bei einem Schaltanlagensegment mit einem einzigen Stromleiter, welcher einen rechteckförmigen Profilquerschnitt aufweist, berechnet sich der Quotient wie folgt:

$$Z = \frac{\frac{2 * L * (H + B)}{C}}{L} = \frac{A}{C * L} = \frac{U}{C}$$

Dabei stellt H die Höhe des Profilquerschnitts beziehungsweise des Stromleiterprofils, B die Breite des gasberührten Leiterabschnitts beziehungsweise der Leiterabschnitte (bei Schienenpaketen), C den Profilquerschnitt des Leiterabschnitts selber, A die vom Isoliergas berührte Oberfläche des Profilquerschnittes des Stromleiterprofils im Leiterabschnitt, U den Umfang des Profilquerschnittes sowie L einen Einheits-Längsabschnitt des Stromleiters von einem Meter dar.

Da scharfkantige Ecken beziehungsweise Längskanten insbesondere bei Hochspannungsapplikationen zu dielektrischen Problemen führen, würde der rechteckförmige Querschnitt in solchen Fällen durch wenn möglich grosszügig bemessene Verrundungen an den Längskanten leicht verändert. Unter grosszügiger Bemessung versteht sich beispielsweise ein Verrundungsradius von gegen 10mm bei einer Breite von 20mm des Profilquerschnitts.

Des Weiteren wird unter Querschnitt des Stromleiters im Licht der vorliegenden Beschreibung im Allgemeinen derjenige Profilquerschnitt des mindestens einen Stromleiters verstanden, welcher in Richtung der Wirkrichtung der Erdanziehungskraft im Schaltanlagensegment ausgerichtet ist.

Es hat sich gezeigt, dass bei einem möglichst optimal genutzten Leiterbauraum eine wirkungsvolle Wärmeübertragung von der Stromleiteroberfläche in das Isoliergas erreichbar ist, wenn der Quotient Z in einem Bereich von etwa 75 bis etwa 300 liegt und wenn sich mindestens ein sich in Richtung der Höhe erstreckender Mantelflächenabschnitt (=Profilflanke) des mindestens einen Leiterabschnitts eine in Wirkrichtung der Erdanziehungskraft orientierte Richtungskomponente aufweist.

Die Berechnung des Quotienten Z bezieht sich übrigens nicht exklusiv auf Einzelleiter, sondern auch auf Teilleiter eines als Schienenpaket konzipierten Stromleiters, solange dass die Querschnitte jedes Einzelleiters oder Teilleiters alle einen gleichartigen Querschnitt bezüglich Form und Grösse aufweisen.

Je nach Anforderungen weist der mindestens eine Stromleiter in einer Ausführungsform eine gasberührte Oberfläche auf, welche im Leiterabschnitt dadurch vergrössert ist, dass der Stromleiter als Leiterpackung mit mindestens zwei Einzelleitern gestaltet ist. Diese Einzelleiter sind durch mindestens einen Konvektionskanal für das Isoliergas voneinander entfernt im Gasraum angeordnet, so dass sich im Nominalbetrieb des Stromleiters im Konvektionskanal selbsttätig eine Konvektionsströmung des Isoliergases mit einer entgegen der Wirkrichtung der Erdanziehungskraft wirkenden Fliessrichtungskomponente einstellt.

Bei einer konkreten Ausführungsform eines derartigen Stromleiters sind die Einzelleiter in einem Anschlussbereich des Stromleiters zusammengeführt und gemeinsam an einem Isolator im Allgemeinen und einer Eingussarmatur eines Stützisolators oder eines Schottisolators im Besonderen, befestigt und elektrisch kontaktiert.

Je nach Anforderungen liegen beispielsweise zwei Einzelleiter auf demselben oder auf unterschiedlichem elektrischem Potential. Im letzteren Fall empfiehlt sich der Einsatz von elektrisch isolierenden Distanzstücken zwischen den Einzelleitern, während im ersteren Fall allfällig vorhandene Distanzstücke elektrisch leitend sein können.

Dabei weist je nach Ausführungsform jeder Einzelleiter mindestens eine sich in Richtung der Höhe erstreckende Seitenflanke mit endseitig daran anschliessenden Endbereichen aufweist, so dass zwei benachbarte Seitenflanken zweier benachbarter Einzelleiter den mindestens einen dazwischen liegenden Konvektionskanal seitlich begrenzen.

Aus dielektrischen Gesichtspunkten kann eine Ausführungsform des Stromleiters mit Formstücken erforderlich beziehungsweise sinnvoll sein. In diesem Fall weist mindestens ein Endbereich mindestens eines Einzelleiters ein sich in Längsrichtung (Profillaufrichtung) erstreckendes, elektrisch leitendes Formstück auf, welches den oder die Einzelleiter in Richtung der Höhe und/oder der Breite vergrössert und welches elektrisch leitend mit dem Einzelleiter verbunden ist.

Eine Ausführungsform des Stromleiter mit Formstücken hat im Betrieb des Schaltanlagensegments den Vorteil, dass die Formstücke zur Homogenisierung des elektrischen Feldes des mindestens einen, als Leiterpackung ausgeführten Stromleiters in dessen mindestens einen Endbereich beitragen, indem der Endbereich - im Stromleiterquerschnitt gesehen - lokal vergrössert ist.

Aus Herstellungs- und oder Handhabungsgründen kann es vorteilhaft sein, wenn das Formstück zumindest teilweise in den Einzelleiter integriert ist.

In einer weiterentwickelten Ausführungsform bei einem Stromleiter mit mindestens zwei Einzelleitern sind mindestens zwei benachbarte Einzelleiter endseitig über mindestens ein gemeinsames Formstück elektrisch miteinander verbunden. In diesem Fall ist es aus dielektrischer Sicht optimal, wenn mehrere Einzelleiter endseitig derart mit mindestens einem Formstück verbunden sind, dass im Stromleiterquerschnittes gesehen bevorzugt eine kreisförmige, dielektrisch optimierte, Einhüllende des Stromleiters das mindestens eine Formstück zumindest abschnittsweise tangential berührt.

Im Fall eines Stromleiters mit mindestens zwei Einzelleitern gleichen elektrischen Potentials kann es je nach Länge des Stromleiters vorteilhaft sein, wenn mindestens zwei benachbarte Einzelleiter mittels eines im dazwischen liegenden Konvektionskanal angeordneten Distanzstückes miteinander verbunden sind. Liegen beide Einzelleiter auf demselben elektrischen Potential, so ist ein elektrisch leitendes, beispielsweise metallisches Distanzstück einsetzbar. Liegen beide Einzelleiter hingegen auf unterschiedlichen elektrischen Potentialen, so müssen das Distanzstück (und allenfalls auch seine Befestigung, etwa in Form einer Schraube) elektrisch isolierend sein. Je nach Bedarf ist das Distanzstück demnach elektrisch und/oder mechanisch belastbar.

Die im Zusammenhang mit dem Schaltanlagensegment genannten Vorteile und Effekte gelten sinngemäss auch für eine gasisolierte Schaltanlage mit mindestens einem derartigen Schaltanlagensegment.

Hinsichtlich des Verfahrens zur Kühlung mindestens eines Stromleiters einer gasisolierten Hoch- oder Mittelspannungs-Schaltanlage beziehungsweise eines Hoch- oder Mittelspannungs-Schaltanlagensegments wird dieses Ziel durch einen Stromleiter gemäss Anspruch 16 gelöst.

Die Merkmale und technischen Effekte des erfindungsgemässen Hochspannungs-Schaltanlagensegments gelten sinngemäss auch für das Verfahren zur Kühlung mindestens eines Stromleiters einer gasisolierten Hoch- oder Mittelsspannungs-Schaltanlage beziehungsweise eines Hoch- oder Mittelspannungs-Schaltanlagensegments. In der Folge gelten die in dieser Beschreibung gegebenen Argumente für Ersteres sinngemäss auch für das Verfahren.

## KURZE BESCHREIBUNG DER ZEICHNUNG

In der Zeichnung sind Ausführungsbeispiele der Erfindung rein schematisch dargestellt. Dabei zeigt:

Fig. 1          einen Querschnitt einer ersten Ausführungsform eines Hochspannungs-Schaltanlagensegments mit einem einzigen Stromleiter;

Fig. 2a-2g      alternative Stromleiterquerschnitte zum in Figur 1 gezeigten Stromleiterprofil;

Fig. 3          einen Querschnitt einer zweiten Ausführungsform eines Hochspannungs-Schaltanlagensegments mit einem einzigen Stromleiter;

Fig. 4          eine dreidimensionale Ansicht einen Querschnitt einer dritten Ausführungsform eines Hochspan- nungs-Schaltanlagensegments mit einem einzigen Stromleiter;

Fig. 5          eine dreidimensionale Ansicht einen Querschnitt einer vierten Ausführungsform eines Hochspannungs-Schaltanlagensegments mit einem einzigen Stromleiter;

Fig. 6          einen Querschnitt einer fünften Ausführungsform eines Hochspannungs-Schaltanlagensegments mit einem Stromleiter beinhaltend zwei Einzelleiter;

Fig. 7          einen Ausschnitt mit einer Seitenansicht des Schnittes entlang der Linie VII-VII von Figur 6;

Fig. 8          einen Querschnitt einer sechsten Ausführungsform eines Hochspannungs-Schaltanlagensegments mit einem Stromleiter beinhaltend drei Einzelleiter;

Fig. 9          einen Querschnitt einer siebten Ausführungsform eines Hochspannungs-Schaltanlagensegments mit einem Stromleiter beinhaltend zwei Einzelleiter;

Fig. 10         einen Querschnitt einer achten Ausführungsform eines Hochspannungs-Schaltanlagensegments mit einem Stromleiter beinhaltend drei Einzelleiter;

Fig. 11         alternativer Stromleiterquerschnitt zum in Figur 9 gezeigten Stromleiterprofil;

Fig. 12         alternativer Stromleiterquerschnitt zum in Figur 9 und 11 gezeigten Stromleiterprofil; und

Fig. 13         eine dreidimensionale Ansicht einer neunten Ausführungsform eines HochspannungsSchaltanlagensegments mit zwei Stromleitern.

## WEGE ZUR AUSFÜHRUNG DER ERFINDUNG

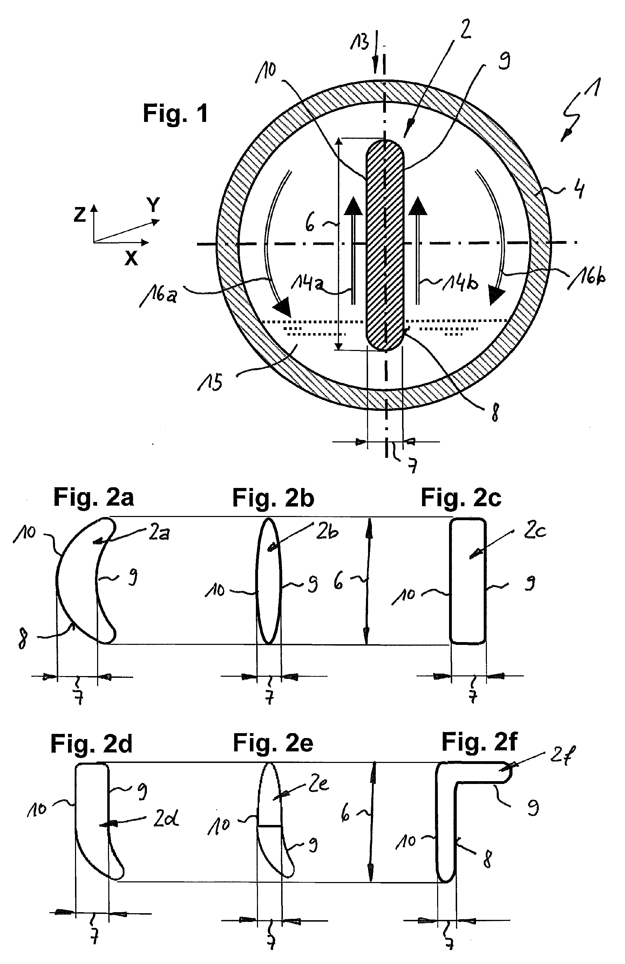

In **Figur 1** ist einen Querschnitt einer Basisausführungsform eines Hochspannungs-Schaltanlagensegments 1 mit einem einzigen Stromleiter dargestellt, welcher sich in einer Längsrichtung Y, nachstehend auch Y-Richtung genannt, erstreckt. Das Schaltanlagensegment 1 umfasst einem Stromleiter 2, welcher im Betrieb des Schaltanlagensegments 1 mittels eines Isoliergases in einem Gasraum 3 eines metallgekapselten Gehäuses 4 des Schaltanlagenabschnitts 1 elektrisch isoliert angeordnet ist. Der Stromleiter 2 umfasst einen sich in Y-Richtung erstreckenden Leiterabschnitt, auf den später noch detailliert eingegangen werden wird.

Der Stromleiter 2 ist aus einem Halbzeugprofil konstanten Querschnitts hergestellt. Der Profilquerschnitt des Stromleiters 2 weist eine Höhe 6 auf, welche etwa vierfach so gross wie eine Breite 7 des Profilquerschnitts ist.

Der Stromleiter 2 weist im gezeigten Leiterabschnitt eine Mantelfläche 8 mit einem ersten Mantelflächenabschnitt 9 und einem gegenüberliegend angeordneten zweiten Mantelflächenabschnitt 10 auf. Die Mantelflächenabschnitte 9, 10 sind von ihrer Grösse und Ausrichtung relativ zur Erdanziehungskraft so bemessen, dass sich im Nominalbetrieb des Stromleiters 2 an der Mantelfläche 8, das heisst insbesondere den Mantelflächenabschnitten 9, 10 selbsttätig eine freie Konvektionsströmung des Isoliergases mit einer bezüglich der 'Wirkrichtung der Erdanziehungskraft' 13 entgegengesetzten Richtungskomponente einstellt. In Figur 1 ist die sich einstellende Gasströmung mit Pfeilen dargestellt. Erste, entlang der Mantelflächenabschnitten 9, 10 fliessende, turbulente Konvektions-Teilströmungen 14a, 14b zeigen dies. Diese Konvektions-Teilströmungen 14a, 14b fördern im Nominalbetrieb der gasisolierten Schaltanlage beziehungsweise des Schaltanlagensegments verhältnismässig kühles Isoliergas aus einem gepunktet stilisiert dargestellten Kaltgas-See 15 pumpenlos und selbsttätig in wärmere Zonen des Schaltanlagensegments. Die wärmere Zone des Schaltanlagensegments befindet sich im dem Kaltgas-See 15 abgewandten Ende des Gasraums 3. Ebenfalls mit Pfeilen dargestellte, zweite Teilströmungen 16a, 16b entsprechen den Konvektions-Teilströmungen 14a, 14b und führen innseitig entlang der Gehäusewand des Gehäuses entlang. Dabei geben sie zumindest einen Teil ihrer aufgenommenen thermischen Energie an das Gehäuse 4 ab und fliessen schliesslich in den Kaltgas-See 15 zurück.

In den **Figuren 2a-2f** sind alternative Stromleiterquerschnitte zum in Figur 1 gezeigten Stromleiterprofil der Stromleiter gezeigt. Der besseren Übersichtlichkeit halber sind die Profilquerschnitte nicht schraffiert dargestellt. Nachfolgend wird nur auf die Unterschiede zur in Figur 1 dargestellten Stromleiter 2 eingegangen. Gleiche oder gleich wirkende Elemente sind mit denselben oder zumindest ähnlichen Bezugszeichen versehen.

Je nach Bedarf und Ausrichtung ist der Leiterquerschnitt der Stromleiter 2a, 2b, 2c, 2d, 2e, 2f einsetzbar. Stark abgewinkelte Leiterquerschnitte wie dasjenige der Stromleiter 2f empfehlen sich beispielsweise dann, wenn die erste Teilströmung zumindest in einem thermisch wesentlichen Leiterabschnitt ebenfalls in Profillängsrichtung fliessen kann, da bei einer Einbaulage in der Figur 1 die erste Teilströmung sonst allenfalls zu stark behindert werden könnte, was zu einer unbefriedigenden Kühlwirkung der Stromleiter 2f führen könnte.

Für die Funktion ist es weitgehend unerheblich, ob die Stromleiter einteilig (2a, 2b, 2c, 2d, 2f) oder mehrteilig, etwa zweiteilig sind, so wie in der in Figur 2e gezeigten Ausführungsform.

Aus der Figur 2e geht zudem hervor, dass unter dem Begriff 'Breite' in der vorliegenden Beschreibung insbesondere bei räumlichen Ausführungsformen von Stromleiterquerschnitten nicht die Gesamtbreite des Leiterprofils verstanden wird, sondern lediglich der dimensionsmässig dickste Querschnitt des Leiterprofils selber.

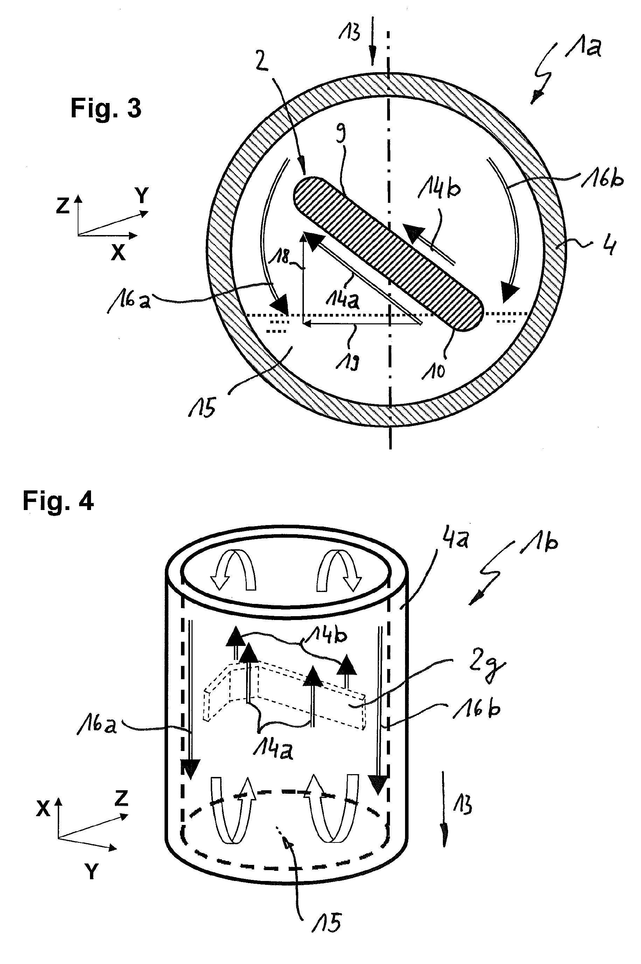

In der **Figur 3** ist eine zweite Ausführungsform des Schaltanlagensegments 1a in der in Figur 1 gezeigten Art dargestellt. Nachfolgend wird nur auf die Unterschiede zum in Figur 1 dargestellten Schaltanlagensegment 1 eingegangen. Gleiche oder gleich wirkende Elemente sind mit denselben oder zumindest ähnlichen Bezugszeichen versehen.

Aufgrund der bezüglich der Y-Achse um einen Winkel gedrehten Lage des Stromleiters 2 stellen sich im Nominalbetrieb des Schaltanlagensegments 1a andere Gasströmungen ein, welche je nach Grösse zu geänderten Wärmeübertragungswerten vom Stromleiter 2 auf das Gehäuse 4 führen können. Im gezeigten Fall stellen sich die Konvektions-Teilströmungen 14a, 14b wiederum ein. Aufgrund der Orientierung relativ zum Gehäuse 3 weist beispielsweise die Konvektions-Teilströmungen 14a sowohl eine bezüglich der Wirkrichtung der Erdanziehungskraft 13 entgegengesetzten erste Richtungskomponente 18, als auch eine quer zur Wirkrichtung der Erdanziehungskraft 13 verlaufende zweite Richtungskomponente 19. Entsprechend gilt dies auch für die andere erste Teilströmung 14b. Die Richtungsumkehr der Gasströmung ist mit andersartigen Pfeilen dargestellt.

In der **Figur 4** ist eine dritte Ausführungsform des Schaltanlagensegments 1b ähnlich der in Figur 1 gezeigten Art dargestellt. Nachfolgend wird deshalb nur auf die Unterschiede zum in Figur 1 dargestellten Schaltanlagensegment 1 eingegangen. Gleiche oder gleich wirkende Elemente sind mit denselben oder zumindest ähnlichen Bezugszeichen versehen. Die räumliche Darstellung des Schaltanlagensegments 1b zeigt das Gehäuse 4a von Aussen, und der Verlauf von dessen Innenwände teilweise in strichpunktierter Form. Im Unterschied zur ersten Ausführungsform 1 erstreckt sich das Gehäuse 4a in Richtung der Erdanziehungskraft 13 und der Stromleiter 2g weist eine dreidimensionale Form auf, welche beispielsweise durch Biegen des Halbzeug-Profils des Stromleiter 2g hergestellt worden ist. Durch die gezeigte Orientierung des Stromleiters 2g relativ zur Erdanziehungskraft 13 stellt sich im Nominalbetrieb des Schaltanlagensegments 1b wiederum die anhand der Figur 1 beschriebenen freien Konvektionsströmungen ein. Der massgebende Profilquerschnitt ist bei dieser Ausführungsform im Wesentlichen reckteckförmig und erstreckt sich im ersten Längsabschnitt in der XY-Ebene und im zweiten Längsabschnitt in der XZ-Ebene.

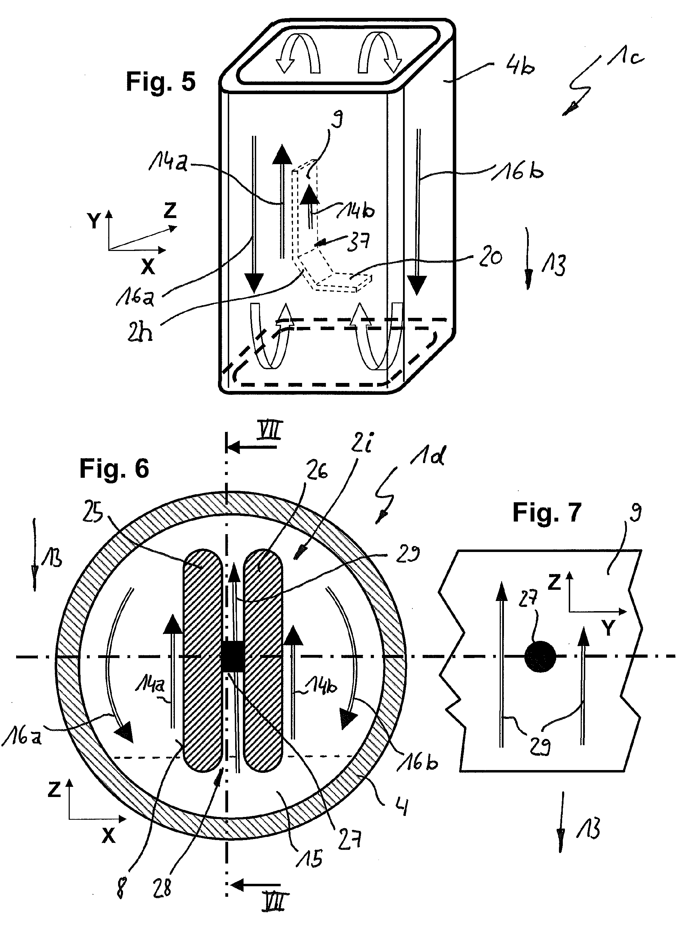

Ähnlich wie Figur 4 zeigt auch die in **Figur 5** gezeigte, dreidimensionale Ansicht des Schaltanlagensegments 1c wiederum einen Stromleiter 2h mit einer dreidimensionalen Form. Aufgrund des dem Kaltgas-See zugewandten Abbuges des Stromleiters 2h dürfte die oberhalb des Abbuges 20 angedeutete erste Teilströmung 14b vermutlich nur wenig zur Kühlung des Stromleiters 2h beitragen, da die vom Kaltgas-See her kommende Konvektionsströmung durch den Abbug 20 am vollflächigen Bestreichen des ersten Mantelflächenabschnitts 14b gehindert wird. Der massgebende Profilquerschnitt ist bei dieser Ausführungsform im Wesentlichen L-förmig und erstreckt sich in der XY-Ebene.

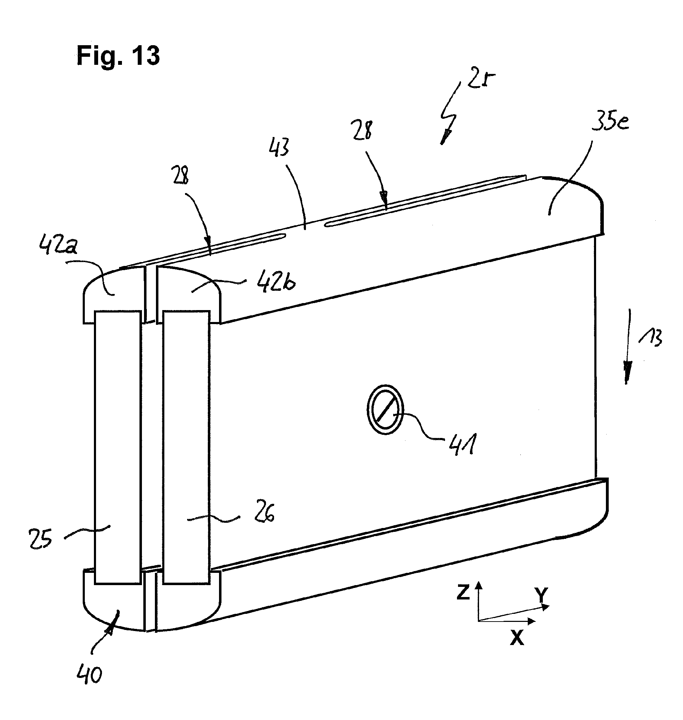

In der **Figur 6** ist eine fünfte Ausführungsform des Schaltanlagensegments 1d in der in Figur 1 gezeigten Lage und Art dargestellt. Nachfolgend wird nur auf die Unterschiede zum in Figur 1 dargestellten Schaltanlagensegment 1 eingegangen. Gleiche oder gleich wirkende Elemente sind wiederum mit denselben oder zumindest ähnlichen Bezugszeichen versehen. Der hier gezeigte Stromleiter 2i beinhaltend eine Leiterpackung mit einem ersten Einzelleiter 25 und einem zweiten Einzelleiter 26, wodurch die Mantelfläche 8 mehrteilig ist. Da beide Einzelleiter 25, 26 im Betrieb des Schaltanlagensegments 1d dasselbe elektrische Potential aufweisen, sind sie miteinander über ein metallisches, hülsenartiges Distanzstück 27 in der in Figur 13 gezeigten Art mechanisch miteinander befestigt. Zusammen mit der **Figur 7** geht aus der Figur 6 weiter hervor, dass die Einzelleiter 25, 26 in Y-Richtung durch das Distanzstück 27 lediglich lokal miteinander verbunden sind, derart dass sich in Y-Richtung überwiegend ein Konvektionskanal 28 für das im Betrieb des Schaltanlagensegments 1d vom Kaltgas-See 15 her kommende strömende Isoliergas geformt ist. Der Konvektionskanal ist dabei derart bemessen, dass sich im Nominalbetrieb des Stromleiters 2i im Konvektionskanal 28 selbsttätig eine Konvektionsströmung in Form einer dritten Teilströmung 29 des Isoliergases mit einer entgegen der Wirkrichtung der Erdanziehungskraft 13 wirkenden Fliessrichtungskomponente einstellt. Je nach Ausführungsform des Konvektionskanals 28 begünstigt dieser gar eine gewisse Sogwirkung. Aufgrund der Orientierung der Einzelleiter 25, 26 relativ zur Wirkrichtung der Erdanziehungskraft 13 dominiert bei dieser Ausführungsform 1d die entgegen der Wirkrichtung der Erdanziehungskraft 13 (d.h. in Z-Richtung) wirkende erste Richtungskomponente/ Fliessrichtungskomponente. Der massgebende Profilquerschnitt des Stromleiters ist bei dieser Ausführungsform im Wesentlichen zweimal die ovale Querschnittsfläche eines Einzelleiters in der XZ-Ebene, während der massgebende Umfang zweimal einen Umfang eines Einzelleiters in der XZ-Ebene beträgt.

Aufgrund der gegenüber der ersten Ausführungsform 1 bei gleichen Leiterabmessungen in der fünften Ausführungsform des Schaltanlagensegments 1d etwa doppelt so grossen Mantelfläche ist die Wärmeübertragung vom Stromleiter 2i an das Isoliergas deutlich grösser als bei der ersten Ausführungsform 1.2

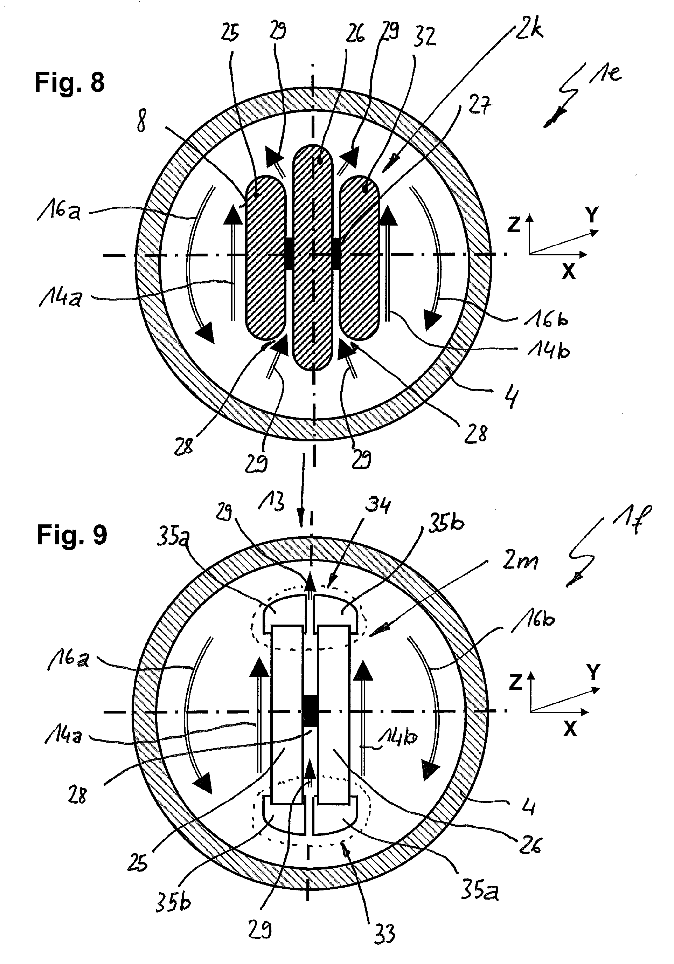

In der **Figur 8** ist eine sechste Ausführungsform des Schaltanlagensegments 1e in der in Figur 1 gezeigten Lage und Art dargestellt. Nachfolgend wird nur auf die Unterschiede zum in Figur 7 dargestellten Schaltanlagensegment 1d eingegangen. Gleiche oder gleich wirkende Elemente sind wiederum mit denselben oder zumindest ähnlichen Bezugszeichen versehen. Der hier gezeigte Stromleiter 2k ist wiederum als Leiterpackung von Einzelleitern ausgeführt, jedoch hier noch mit einem dritten Einzelleiter 32. Wie bei der fünften Ausführungsform 1d begrenzen jeweils zwei benachbarte Einzelleiter 25, 26 und 26, 32 jeweils einen Konvektionskanal 28 seitlich. Damit der Stromleiter 2k dielektrisch ein einem Rundleiter möglichst ähnliches Verhalten aufweist, weisen die Profilquerschnitte des ersten Einzelleiters 25 und des dritten Einzelleiters 32 jeweils kürzere Höhen auf, als der dazwischen angeordnete zweite Einzelleiter 26.

Aufgrund der gegenüber der fünften Ausführungsform 1d erneut vergrösserten Mantelfläche 8 ist bei der sechsten Ausführungsform des Schaltanlagensegments die Wärmeübertragung vom Stromleiter 2k an das Isoliergas zumindest leicht grösser als bei der fünften Ausführungsform 1d.

Alternativ ist eine Kombination von unterschiedlichen Einzelleitern mit Querschnitten gemäss den Figuren 2a-2f zu einer Leiterpackung bei Bedarf realisierbar.

In der **Figur 9** ist eine siebte Ausführungsform des Schaltanlagensegments 1f in der in Figur 2 gezeigten Lage und Art dargestellt. Nachfolgend wird nur auf die Unterschiede zum in Figur 2 dargestellten Schaltanlagensegment 1b eingegangen. Gleiche oder gleich wirkende Elemente sind wiederum mit denselben oder zumindest ähnlichen Bezugszeichen versehen. Der hier gezeigte Stromleiter 2m ist wiederum als Leiterpackung von Einzelleitern ausgeführt und weist einen ersten Endbereich 33 des Stromleiters 2m und einen in Wirkrichtung der Erdanziehungskraft 13 entgegengesetzt liegenden zweiten Endbereich 34 des Stromleiters 2m auf. In Figur 9 sind die Endbereiche 33, 34 getupft und lediglich stilisiert dargestellt. Jeder Einzelleiter ist mit seinen endbereichsseitigen Enden elektrisch leitend mit je einem stangenförmigen Formstück 35a, 35b verbunden, welche sich in Längsrichtung (Y) erstrecken. Anders ausgedrückt, verbessern die bezüglich den Einzelleitern 25, 26 lateral vergrösserten Formstücke 35a, 35b die dielektrischen Eigenschaften des Stromleiters 2m je nach Ausführungsform im Vergleich zur sechsten Ausführungsform 1e beträchtlich. Der besseren Verständlichkeit wegen wurde auf eine Schraffierung der Einzelleiter 25, 26 und der Formstücke 35a, 35b verzichtet.

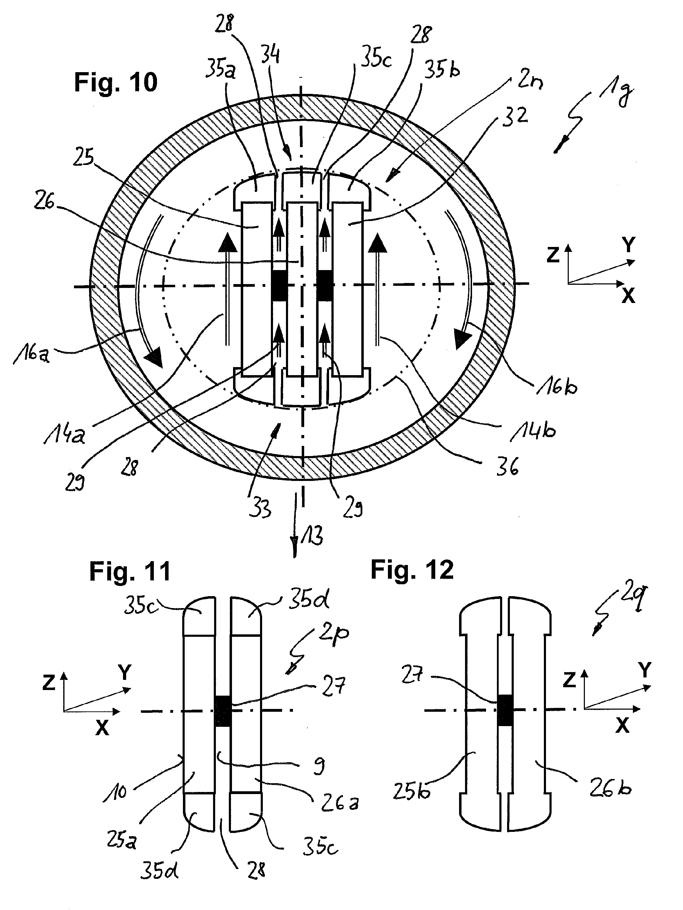

Die in der **Figur 10** dargestellte, achte Ausführungsform des Schaltanlagensegments 1g mit dem Stromleiter 2n entspricht von Aufbau des Schienenpakets mit den Einzelleitern 25, 26, 32 her der in Figur 8 gezeigten Ausführungsform - mit dem Unterschied, dass die Einzelleiter 25, 26, 32 in den Endbereichen 33, 34 elektrisch mit je einem Formstück 35a, 35b, 35c ähnlich wie in der in Figur 9 beschriebenen Ausführungsform 1f ausgerüstet sind. Gleiche oder gleich wirkende Elemente sind wiederum mit denselben oder zumindest ähnlichen Bezugszeichen versehen. Der besseren Verständlichkeit wegen wurde auf eine Schraffierung der Einzelleiter 25, 26, 32 und der Formstücke 35a, 35b, 35c verzichtet.

Die Formstücke 35a, 35b, 35c sind in deren jeweiligem Formstück-Querschnitt formmässig idealerweise derart angepasst, dass sie eine bevorzugt kreisförmige Einhüllende 36 des Stromleiters 2n zumindest abschnittsweise tangential berühren. Die die Stromleiterprofile bei den Formstücken 35a, 35b, 35c mantelförmig Einhüllende 36 hat zumindest in der Zone der Endbereiche 33, 34 die Querschnittsform eines dielektrisch idealen Kreises, wenn das Gehäuse 4 ebenfalls einen kreisringförmigen Querschnitt aufweist.

Der massgebende Profilquerschnitt ist bei dieser Ausführungsform die Summe der Einzelquerschnitte aller Einzelleiter 25, 26, 32 und aller Formstücke 35a, 35b, 35c in der XZ-Ebene.

Die **Figur 11** und die **Figur 12** illustrieren alternative Querschnitte und Aufbauweisen von Leiterpackungen/Stromleiter 2p, 2q mit jeweils zwei Einzelleitern. Der besseren Verständlichkeit halber sind die beiden Leiterpackungen/Stromleiter 2p, 2q etwa als Alternativen zum Stromleiter 2i in Figur 6 oder Stromleiter 2m in Figur 9 einsetzbar.

Ähnlich wie die in Figur 2e gezeigte, mehrteilige Stromleiter 2e sind auch die Einzelleiter 25a, 26a der Leiterpackung 2p mehrteilig aufgebaut. Die leitenden Formstücke 35c, 35d sind in den Endbereichen des Stromleiters elektrisch wiederum mit den Einzelleitern 25a, 26a verbunden. Im Unterschied zum Stromleiter 2m von Figur 9 sind die Formstücke 35c, 35d jedoch bündig zum jeweiligen ersten Mantelflächenabschnitt 9 und zweiten Mantelflächenabschnitt 10 fluchtend ausgeführt.

Im Fall der in Figur 12 gezeigten Leiterpackung beziehungsweise Stromleiter 2q ist die Situation dahingehend etwas anders, als dass die beiden Formstücke zwar die in Figur 9 gezeigte Querschnittsform aufweisen, die beiden Formstücke jedoch vollständig in das Profil der jeweiligen Einzelleiter 25b, 26b integriert sind. Im konkreten Fall sind die Einzelleiter 25b, 26b Strangpressprofile aus Leitermaterial.

In der **Figur 13** ist ein Leiterabschnitt 37 einer weiteren Ausführungsform eines Stromleiter 2r in räumlicher Darstellung, wobei sich der Stromleiter 2r in einer Längsrichtung (Y) erstreckt. Der Stromleiter 2r ist wiederum als Leiterpackung mit einem ersten Einzelleiter 25 und einem zweiten Einzelleiter 26 ausgeführt. Nachfolgend wird nur auf die Unterschiede zur in Figur 9 dargestellten Stromleiter 2m eingegangen. Gleiche oder gleich wirkende Elemente sind wiederum mit denselben oder zumindest ähnlichen Bezugszeichen versehen. Die Stirnfläche des nun beschriebenen Stromleiters 2r ist in Wirklichkeit keine reale Stirnfläche, sondern dient wie in Figur 9 lediglich zur Erläuterung der Ausführungsform. Hinsichtlich des Aufbaus des beiden Einzelleiter 25, 26 sei an dieser Stelle auf die Beschreibung der Stromleiter 2m von Figur 9 verwiesen. Von der Befestigung der beiden Einzelleiter 25, 26 über das Distanzstück ist lediglich ein Schraubenkopf 41 einer durch das hülsenförmige Distanzstück hindurchführende Schraube sichtbar. Obwohl das Formstück der Stromleiter 2r über weite Teile der Leiterlänge in Richtung Y einen identischen Leiterquerschnitt wie die in Figur 9 gezeigten Formstücke 35a, 35b aufweist, handelt es sich bei der hier gezeigten Ausführungsform der Stromleiter 2r um einen Stromleiter mit zwei einteiligen Formstücke 35d. Bei näherer Betrachtung wird aus Figur 13 ersichtlich, dass die Stromleiter 2r über weite Teile der Leiterlänge zwei durch den Konvektionskanal 28 voneinander getrennte Formstückhälften 42a, 42b aufweist, welche ausser in einem sie verbindenden Brückenbereich 43 den in Figur 9 gezeigten Querschnitt der Formstücke 35a, 35b von Figur 9 aufweisen. Um die Gasströmung im Bereich der Distanzhülse nicht zusätzlich zu unterbrechen, ist der Brückenbereich 43 in Wirkrichtung der Erdanziehungskraft gesehen in etwa oberhalb dem Distanzstück angeordnet.

**BEZUGSZEICHENLISTE**

| | |
|---|---|
| 1,1a,1b,1c,1d,1e,1f,1g | Schaltanlagensegment |
| 2,2a,2b,2c,2d, 2e,2f,2g,2h,2i, 2k,2m,2n,2p,2q,2r | Stromleiter |
| 3 | Gasraum |
| 4,4a,4b | Gehäuse |
| 6 | Höhe des Profilquerschnitts des Stromleiters |
| 7 | Breite des Profilquerschnitts des Stromleiters |
| 8 | Mantelfläche des Stromleiters |
| 9 | Erster Mantelflächenabschnitt |
| 10 | Zweiter Mantelflächenabschnitt |
| 13 | Richtung/Wirkrichtung der Erdanziehungskraft |
| 14a,14b | Erste Teilströmung |
| 15 | Kaltgas-See von Isoliergas |
| 16a,16b | Zweite Teilströmung |
| 18 | Erste Richtungskomponente der ersten Teilströmung |
| 19 | zweite Richtungskomponente der ersten Teilströmung |
| 20 | Abbug |
| 25,25a,25b | Erster Einzelleiter |
| 26,26a,26b | Zweiter Einzelleiter |
| 27 | Distanzstück |

| 28 | Konvektionskanal |
| 29 | Dritte Teilströmung |
| 32 | Dritter Einzelleiter |
| 33 | Erster Endbereich des Stromleiters |
| 34 | zweiter Endbereich des Stromleiters |
| 35a,35b,35c,35d,35e | Formstück |
| 36 | Einhüllende |
| 37 | Leiterabschnitt |
| 40 | Stirnfläche |
| 41 | Schraubenkopf |
| 42a,42b | Formstückhälften |
| 43 | Brückenbereich |

**Patentansprüche**

1. Hoch- oder Mittelspannungs-Schaltanlagensegment (1,1a, 1b,1c,1d,1e,1f,1g) mit mindestens einem Stromleiter (2,2a,2b,2c,2d,2e,2f,2g,2h,2i,2k,2m,2n,2p,2q,2r), welcher mittels eines Isoliergases in einem metallgekapselten Gehäuse (4,4a,4b) des Schaltanlagensegments (1,1a,1b,1c,1d,1e,1f,1g) elektrisch isoliert angeordnet ist,
wobei der Stromleiter mindestens einen Leiterabschnitt (37) umfasst, welcher sich in einer Längsrichtung (Y) erstreckt, und
wobei der Stromleiter aus mindestens einem Profil mit einem konstanten Profilquerschnitt hergestellt ist und der Profilquerschnitt eine Höhe (6) aufweist, welche mindestens doppelt so gross wie eine Breite (7) des Profilquerschnitts ist, und
wobei mindestens ein sich in Richtung der Höhe (6) erstreckender Mantelflächenabschnitt (9, 10) des mindestens einen Leiterabschnitts (37) eine in Wirkrichtung der Erdanziehungskraft (13) orientierte Richtungskomponente (18) aufweist, und
wobei ein Quotient (Z) gebildet aus einem Umfang (U) des vom Isoliergas berührten Profilquerschnitts des Stromleiters pro Profilquerschnitt (C) im mindestens einen Leiterabschnitt (37) mindestens 75 und höchstens 300 pro Meter Länge des Leiterabschnitts (37) beträgt.

2. Schaltanlagensegment nach Anspruch 1, **dadurch gekennzeichnet, dass** das Isoliergas im Betrieb des Schaltanlagensegments (1,1a,1b,1c,1d,1e,1f,1g) einen Absolutdruck von mindestens 200000 Pascal aufweist.

3. Schaltanlagensegment nach Anspruch 1 oder 2, **dadurch gekennzeichnet, dass** eine Mantelfläche (8) des mindestens einen Leiterabschnitts (37) einen ersten Mantelflächenabschnitt (9) und einen dem ersten Mantelflächenabschnitt (9) gegenüberliegend angeordneten zweiten Mantelflächenabschnitt (10) aufweist.

4. Schaltanlagensegment nach Anspruch 3, **dadurch gekennzeichnet, dass** der erste Mantelflächenabschnitt (9) und/oder der zweite Mantelflächenabschnitt (10) relativ zur Wirkrichtung der Erdanziehungskraft (13) derart ausgerichtet ist, dass das Isoliergas im Nominalbetrieb des Stromleiters (2,2a,2b,2c,2d,2e,2f,2g,2h, 2i,2k,2m,2n,2p,2q, 2r) entlang dem ersten Mantelflächenabschnitt (9) und/oder dem zweiten Mantelflächenabschnitt (10) eine resultierende Fliessgeschwindigkeit von mindestens 0.01m/s aufweist, insbesondere wobei eine entgegen der Wirkrichtung der Erdanziehungskraft (13) wirkende Fliessrichtungskomponente (18,19) mindestens 50% der resultierenden Fliessgeschwindigkeit beisteuert.

5. Schaltanlagensegment nach 3 oder 4, **dadurch gekennzeichnet, dass** der mindestens eine Stromleiter (2,2a,2b,2c,2d,2e,2f,2g,2h,2i,2k,2m,2n,2p, 2q,2r) zumindest partiell eine derart beschaffene Oberfläche der Mantelfläche (8) aufweist, dass im Nominalbetrieb des Stromleiters die Konvektionsströmung beim ersten Mantelflächenabschnitt (9) und/oder beim zweiten Mantelflächenabschnitt (10) überwiegend turbulent ist.

6. Schaltanlagensegment nach einem der Ansprüche 1 bis 5, **dadurch gekennzeichnet, dass** zumindest ein Leiterabschnitt (37) des mindestens einen Stromleiters (2,2a, 2c,2i,2k) einen rechteckartigen Profilquerschnitt aufweist, wobei der erste Mantelflächenabschnitt (9) und der zweite Mantelflächenabschnitt (10) beim rechteckartigen Profilquerschnitt die grösseren Seiten des rechteckartigen Profilquerschnittes bilden.

7. Schaltanlagensegment nach einem der Ansprüche 1 bis 6, **dadurch gekennzeichnet, dass** eine gasberührte Oberfläche (8) des mindestens einen Stromleiters (2i,2k,2m, 2n,2p,2q,2r) im Leiterabschnitt (37) dadurch vergrössert ist, dass der Stromleiter (2i,2k,2m,2n, 2p,2q,2r) als Leiterpackung mit mindestens zwei Einzelleitern (25,25a,25b, 26a,26b,32) gestaltet ist, welche durch mindestens einen Konvektionskanal (28) für das Isoliergas voneinander getrennt angeordnet sind, so dass sich im Nominalbetrieb des mindestens einen Stromleiters (2i,2k,2m,2n,2p,2q, 2r) im Konvektionskanal (28) selbsttätig eine Konvektionsströmung (29) des Isoliergases mit einer entgegen der Wirkrichtung der Erdanziehungskraft (13) wirkenden Fliessrichtungskomponente (18) einstellt.

8. Schaltanlagensegment nach Anspruch 7, **dadurch gekennzeichnet, dass** jeder Einzelleiter (25,25a,25b,26a, 26b, 32) mindestens eine sich in Richtung der Höhe (6) erstreckende Seitenflanke (9,10) mit endseitig daran anschliessenden Endbereichen (33,34) aufweist, so dass zwei benachbarte Seitenflanken (9,10) zweier benachbarter Einzelleiter (25,25a,25b,26a,26b,32) den mindestens einen dazwischen liegenden Konvektionskanal (28) seitlich begrenzen.

9. Schaltanlagensegment nach Anspruch 8, **dadurch gekennzeichnet, dass** mindestens ein Endbereich (33,34) mindestens eines Einzelleiters (25,25a,25b,26a,26b,32) ein sich in Längsrichtung (Y) erstreckendes, elektrisch leitendes Formstück (35a,35b,35c,35d,35e) aufweist, welches den oder die Einzelleiter (25,25a, 25b,26a,26b,32) in Richtung der Höhe (6) und/oder der Breite (7) vergrössert und welches elektrisch leitend mit dem Einzelleiter (25,25a,25b,26a,26b,32) verbunden ist.

10. Schaltanlagensegment nach Anspruch 9, **dadurch gekennzeichnet, dass** das Formstück (35a,35b) zumindest teilweise in den Einzelleiter (25a,26a) integriert ist.

11. Schaltanlagensegment nach Anspruch 9, **dadurch gekennzeichnet, dass** mindestens zwei benachbarte Einzelleiter (25,26) endseitig über mindestens ein gemeinsames Formstück (35e) elektrisch miteinander verbunden sind.

12. Schaltanlagensegment nach einem der Ansprüche 7 bis 11, **dadurch gekennzeichnet, dass** mehrere Einzelleiter (25,25a,25b,26a,26b,32) endseitig derart mit mindestens einem Formstück (35a,35b,35c,35d,35e) verbunden sind, dass im Stromleiterquerschnitt gesehen eine bevorzugt kreisförmige Einhüllende (36) des Stromleiters (2m,2n,2p, 2q,2r) das mindestens eine Formstück (35a, 35b,35c,35d,35e) zumindest abschnittsweise tangential berührt.

13. Gasisolierte Hochspannungs-Schaltanlage mit einem Schaltanlagensegment (1,1a,1b,1c,1d,1e,1f,1g) nach einem der vorangegangenen Ansprüche.

14. Verfahren zur Kühlung mindestens eines Stromleiters (2,2a,2b,2c,2d,2e,2f,2g,2h,2i,2k,2m,2n,2p,2q,2r) eines gasisolierten Hoch- oder Mittelspannungs-Schaltanlagensegments (1,1a,1b,1c,1d,1e,1f,1g), umfassend die Schritte:

a) Bereitstellen eines gasisolierten Hoch- oder Mittelspannungs-Schaltanlagensegments (1,1a,1b,1c,1d, 1e,1f, 1g) mit mindestens einem Stromleiter (2,2a,2b,2c,2d,2e,2f,2g,2h,2i,2k,2m,2n,2p,2q,2r), welcher mittels einem Isoliergas in einem metallgekapselten Gehäuse (4,4a,4b) des Schaltanlagenabschnitts elektrisch isoliert angeordnet ist, wobei der mindestens eine Stromleiter mindestens einen Leiterabschnitt (37) umfasst, welcher sich in einer durch den Stromleiter definierten Längsrichtung (Y) erstreckt, und wobei der Stromleiter aus mindestens einem Profil konstanten Profilquerschnitts hergestellt ist und der Profilquerschnitt eine Höhe (6) aufweist, welche mindestens doppelt so gross wie eine Breite (7) des Profilquerschnitts ist, und wobei mindestens ein sich in Richtung der Höhe (6) erstreckender Mantelflächenabschnitt (9, 10) des mindestens einen Leiterabschnitts (37) eine in Wirkrichtung der Erdanziehungskraft (13) orientierte Richtungskomponente (18) aufweist, und wobei ein Quotient (Z) gebildet aus einem Umfang (U) des vom Isoliergas berührten Profilquerschnitts des Stromleiters pro Profilquerschnitt (C) im mindestens einen Leiterabschnitt (37) mindestens 75 und höchstens 300 pro Meter Länge des Leiterabschnitts (37) beträgt,

b) Anlegen einer elektrischen Last auf den mindestens einen Stromleiter im Nominalbetrieb des Schaltanlagensegments,

c) Erwärmen des mindestens einen Stromleiters und dessen mindestens einen Leiterabschnitt (37) mittels des durch die elektrische Last hervorgerufenen Ohm'schen Widerstandes des Stromleiters,

d) Kühlen einer Mantelfläche (8) im mindestens einen Leiterabschnitt (37) mittels der durch eine freie Gaskonvektion innerhalb des Gehäuses (4,4a,4b) selbsttätig erzeugten Konvektionsströmung (14a,14b, 16a,16b,29) des Isoliergases mit einer bezüglich der Wirkrichtung der Erdanziehungskraft (13) entgegengesetzten Richtungskomponente (18) einstellt.

**15.** Verfahren nach Anspruch 14, **dadurch gekennzeichnet, dass** ein mittels der freien Konvektionsströmung abführbarer erster Wärmeanteil grösser als ein mittels Wärmestrahlung abführbarer zweiter Wärmeanteil von der Mantelfläche (8) des mindestens einen Leiterabschnitts (37) an das Isoliergas und vom Isoliergas an das Gehäuse (4,4a, 4b) ist.

Fig. 1

Fig. 2a    Fig. 2b    Fig. 2c

Fig. 2d    Fig. 2e    Fig. 2f

Fig. 3

Fig. 4

**Fig. 5**

**Fig. 6**

**Fig. 7**

Fig. 8

Fig. 9

Fig. 10

Fig. 11

Fig. 12

**Fig. 13**